(19) Europäisches Patentamt / European Patent Office / Office européen des brevets

(11) **EP 4 716 188 A1**

(12) **EUROPEAN PATENT APPLICATION**
published in accordance with Art. 153(4) EPC

(43) Date of publication:
25.03.2026 Bulletin 2026/13

(21) Application number: 23937343.4

(22) Date of filing: 28.12.2023

(51) International Patent Classification (IPC):
*H04L 67/1025* (2022.01)

(52) Cooperative Patent Classification (CPC):
H04L 67/1025; H04L 67/5683; H04N 5/76;
H04N 7/18

(86) International application number:
PCT/CN2023/142586

(87) International publication number:
WO 2024/234672 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.05.2023 CN 202310559310

(71) Applicant: Zhejiang Uniview Technologies Co.,
Ltd.
Hangzhou, Zhejiang 310051 (CN)

(72) Inventors:
• LIU, Zhen
Hangzhou, Zhejiang 310051 (CN)
• WU, Zuohua
Hangzhou, Zhejiang 310051 (CN)
• DING, Qiang
Hangzhou, Zhejiang 310051 (CN)

(74) Representative: HGF
HGF Europe LLP
Neumarkter Straße 18
81673 München (DE)

(54) **DATA STORAGE METHOD AND APPARATUS, ELECTRONIC DEVICE, AND STORAGE MEDIUM**

(57) Provided are a data storage method and apparatus, an electronic device, and a storage medium. The data storage method includes determining (S110), according to a preset number of storage channels, a time granularity and respective full-coverage thresholds matching multiple photographing devices; determining (S120) the number of full-coverage devices in each time granularity, where each full-coverage device is a photographing device whose remaining memory is less than or equal to a full-coverage threshold matching the full-coverage device; and in response to determining that the number of full-coverage devices in a target time granularity is less than a preset full-coverage device number threshold, performing (S130) data storage according to the respective full-coverage thresholds matching the multiple photographing devices.

FIG. 1

**Description**

This application claims priority to Chinese Patent Application No. 202310559310.6 filed with the China National Intellectual Property Administration (CNIPA) on May 16, 2023, the disclosure of which is incorporated herein by reference in its entirety.

TECHNICAL FIELD

The present application relates to the field of data processing technologies, for example, a data storage method and apparatus, an electronic device, and a storage medium.

BACKGROUND

In the field of video data storage for monitoring devices, the retention period of video data is often preconfigured. The retention period refers to the maximum duration for which video data can be maintained. Typically, multiple monitoring devices are configured with the same retention period, for example, 30 days.

Such a configuration mode with a unified retention period tends to cause a situation where, after video data has been stored for a certain period of time, multiple monitoring devices almost simultaneously trigger to achieve full coverage and enter a concentrated full-coverage state. Full coverage refers to a condition in which the storage space becomes insufficient so that earlier-stored or lower-value historical video data is required to be deleted to release storage space. When multiple monitoring devices enter the full-coverage state simultaneously, historical video data are required to be deleted in batches. This operation of deleting historical video data is performed concurrently with normal storage of video data, requiring disk erasure and rewriting. Consequently, disk rewriting pressure increases, the read/write performance is occupied, and the normal storage of real-time video data is affected.

SUMMARY

The present application provides a data storage method and apparatus, an electronic device, and a storage medium to achieve dynamic balancing of full-coverage pressure during multi-channel storage, avoiding storage performance insufficiency caused by multiple devices reaching full coverage simultaneously, thereby ensuring normal data storage.

Embodiments of the present application provide a data storage method. The data storage method includes the following:

A time granularity and full-coverage thresholds respectively matching multiple photographing devices are determined according to a preset number of storage channels.

The number of full-coverage devices in each time granularity is determined, where a full-coverage device is a photographing device whose remaining memory is less than or equal to a full-coverage threshold matching the full-coverage device.

In response to determining that the number of full-coverage devices in a target time granularity is less than a preset full-coverage device number threshold, data storage is performed according to the full-coverage thresholds respectively matching the multiple photographing devices.

Embodiments of the present application also provide a data storage apparatus. The apparatus includes a time granularity determination module, a full-coverage device number determination module, and a data storage module.

The time granularity determination module is configured to determine a time granularity and full-coverage thresholds respectively matching multiple photographing devices according to a preset number of storage channels.

The full-coverage device number determination module is configured to determine the number of full-coverage devices in each time granularity, where a full-coverage device is a photographing device whose remaining memory is less than or equal to a full-coverage threshold matching the full-coverage device.

The data storage module is configured to, in response to determining that the number of full-coverage devices in a target time granularity is less than a preset full-coverage device number threshold, perform data storage according to the full-coverage thresholds respectively matching the multiple photographing devices.

Embodiments of the present application also provide an electronic device. The electronic device includes a memory, a processor, and a computer program stored in the memory and executable on the processor. When executing the computer program, the processor performs the data storage method of any embodiment of the present application.

Embodiments of the present application also provide a storage medium storing computer-executable instructions which, when executed by a computer processor, cause the computer processor to perform the data storage method of any embodiment of the present application.

BRIEF DESCRIPTION OF DRAWINGS

The drawings used in the description of embodiments are described below. The drawings described below illustrate part of embodiments of the present application, and those of ordinary skill in the art can obtain other drawings based on these drawings on the premise that no creative work is done.

FIG. 1 is a flowchart of a data storage method according to embodiment one of the present application.

FIG. 2 is a diagram illustrating concentrated full coverage during data storage according to embodiment one of the present application.

FIG. 3 is another flowchart of a data storage method according to embodiment two of the present application.

FIG. 4 is a diagram illustrating full-coverage pressure balancing when bit rates of multiple photographing devices are the same according to embodiment two of the present application.

FIG. 5 is another flowchart of a data storage method according to embodiment three of the present application.

FIG. 6 is a diagram illustrating full-coverage pressure balancing when bit rates of multiple photographing devices are different according to embodiment three of the present application.

FIG. 7 is a diagram illustrating the structure of a data storage apparatus according to embodiment four of the present application.

FIG. 8 is a diagram illustrating the structure of an electronic device according to embodiment five of the present application.

DETAILED DESCRIPTION

Technical solutions in embodiments of the present application will be described in conjunction with drawings of the present application. The embodiments described herein are part, not all, of the embodiments of the present application. Based on the embodiments of the present application, all other embodiments obtained by those of ordinary skill in the art on the premise that no creative work is done are within the scope of the present application.
Terms such as "first" and "second" in the description, claims and drawings of the present application are used to distinguish between similar objects and are not necessarily used to describe a particular order or sequence. Data used in this manner are interchangeable where appropriate so that the embodiments of the present application described herein can be implemented in an order not illustrated or described herein. In addition, terms "including", "having", and variations thereof are intended to encompass a non-exclusive inclusion. For example, a process, method, system, product, or device that includes a series of steps or units not only includes the listed steps or units but may also include other steps or units that are not listed or are inherent to such process, method, product, or device.

Embodiment one

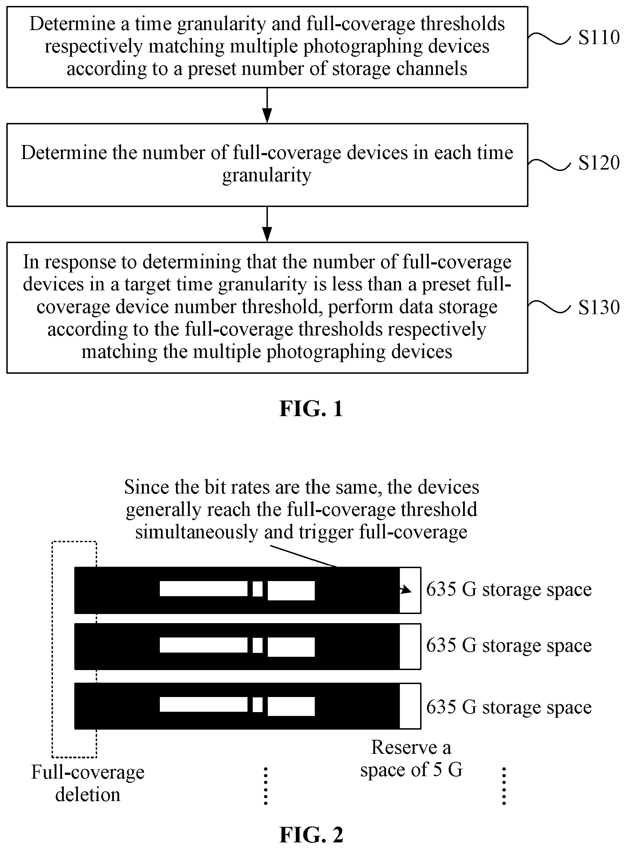

FIG. 1 is a flowchart of a data storage method according to embodiment one of the present application. This embodiment is applicable to the scenario where video data of multiple monitoring devices are stored simultaneously. The method may be executed by a data storage apparatus. The data storage apparatus may be implemented in hardware and/or software. The data storage apparatus may be configured in an electronic device.
As shown in FIG. 1, the method includes the following steps:
In S110, a time granularity and full-coverage thresholds respectively matching multiple photographing devices are determined according to a preset number of storage channels.
The number of storage channels is the number of photographing devices that perform file storage simultaneously. FIG. 2 is a diagram illustrating concentrated full coverage during data storage. As shown in FIG. 2, when multiple photographing devices have the same bit rate - - 2 Mbps (million bits per second), have the same full-coverage threshold, and have the same reserved storage space - 5 G, these photographing devices, when in the ideal state, reach the full-coverage state simultaneously and start to delete historical data simultaneously. However, even if these photographing devices have the same bit rate, the same full-coverage threshold, and the same size of to-be-stored data, these photographing devices usually reach the full-coverage state at different times due to device abnormality, network fluctuation, and other reasons. Therefore, in this embodiment, the time granularity is defined as representing the synchronism of the photographing devices reaching the full-coverage state. If two photographing devices reach the full-coverage state in the same time granularity, it is considered that the two photographing devices reach the full-coverage state at the same time. The full-coverage threshold is configured to determine whether a photographing device reaches the full-coverage state. By way of example, when the remaining memory of a photographing device is less than or equal to the full-coverage threshold, the photographing device is regarded as reaching the full-coverage state.

In this embodiment, the time granularity is determined according to the preset number of storage channels, and the number of time granularities is the same as the number of storage channels. The larger the number of storage channels, that is, the larger the number of photographing devices, the greater the influence of the concentrated full-coverage of the photographing devices on the data storage performance; therefore, a shorter time granularity needs to be set, thereby balancing the full-coverage pressure of the multiple photographing devices. However, the manner of determining the time granularity according to the number of storage channels is not limited in this embodiment.

By way of example, incremental full-coverage thresholds or decremental full-coverage thresholds may be set for the multiple photographing devices. However, this embodiment does not impose any limitation on the manner in which the full-coverage thresholds corresponding to different photographing devices are set, nor on the relationships between the full-coverage thresholds of different photographing devices. In this embodiment, different full-coverage thresholds are determined for different photographing devices. With this configuration, the times at which different photographing devices reach the full-coverage state can be staggered, thereby preliminarily distributing the full-coverage pressure among the photographing devices.

In S120, the number of full-coverage devices in each time granularity is determined.

A full-coverage device is a photographing device whose remaining memory is less than or equal to the full-coverage threshold matching the full-coverage device.

In this embodiment, when the same number of photographing devices as the storage channels perform video data storage simultaneously, it is feasible to pre-calculate the number of full-coverage devices reaching the full-coverage state within the same number of time granularities as the storage channels. By way of example, according to the standard data size of the video data, the bit rates of the multiple photographing devices, and the full-coverage thresholds of the multiple photographing devices, the time granularities in which the photographing devices reach the full-coverage state may be calculated, and then the number of full-coverage devices reaching the full-coverage state in each time granularity may be calculated.

In S130, in response to determining that the number of full-coverage devices in a target time granularity is less than a preset full-coverage device number threshold, data storage is performed according to the full-coverage thresholds respectively matching the multiple photographing devices.

The full-coverage device number threshold is configured to determine whether the number of full-coverage devices that reach the full-coverage state simultaneously is excessive. When the number of full-coverage devices in a time granularity is less than the full-coverage device number threshold, it is considered that the impact of the number of full-coverage devices in the time granularity on normal data storage performance falls in an acceptable range. By way of example, when the number of full-coverage devices in another time granularity is greater than or equal to the full-coverage device number threshold, it is considered that the full-coverage devices in this time granularity are excessively large in number and relatively concentrated, and the full-coverage pressure of the excessively large number of full-coverage devices in this time granularity may be distributed to another time granularity with relatively small full-coverage pressure. When the number of full-coverage devices in the target time granularity is equal to the preset full-coverage device number threshold, it is feasible to use the solution of distributing the full-coverage pressure of the excessively large number of full-coverage devices in this time granularity to another time granularity with relatively small full-coverage pressure or use a normal buffer solution.

By way of example, the process of setting the full-coverage device number threshold may include determining a first full-coverage device number according to the preset number of storage channels and a full-coverage ratio, and using the maximum value between the first full-coverage device number and a preset second full-coverage device number as the full-coverage device number threshold.

The full-coverage ratio may be flexibly set according to the actual requirements of data storage. By way of example, the full-coverage ratio may be 5%. The second full-coverage device number is configured to represent the minimum value of the full-coverage device number threshold. By way of example, the second full-coverage device number may be set to 2, that is, the full-coverage device number threshold may be $max(n \times 5\%, 2)$, where n denotes the number of storage channels.

In this embodiment, different full-coverage thresholds are set for different photographing devices, and the number of full-coverage devices in each time granularity is counted. When the number of full-coverage devices in the target time granularity is less than the full-coverage device number threshold, that is, when the number of photographing devices that reach the full-coverage state simultaneously does not affect the normal storage of video data, data are stored according to the full-coverage thresholds of different photographing devices. This configuration enables the times at which different photographing devices reach the full-coverage state to be staggered, reduces the number of photographing devices reaching the full-coverage state simultaneously, and mitigates the pressure caused by the concentrated full-coverage.

According to the technical solution of this embodiment of the present application includes the following: a time granularity and the full-coverage thresholds respectively matching multiple photographing devices are determined according to a preset number of storage channels; the number of full-coverage devices in each time granularity is calculated; and in response to determining that the number of full-coverage devices in a target time granularity is less than a preset full-coverage device number threshold, data storage is performed according to the full-coverage thresholds respectively matching the multiple photographing devices. The technical solution of the present application achieves dynamic balancing of full-coverage pressure during multi-channel storage, avoiding storage performance insufficiency caused by the concentrated full coverage, thereby ensuring normal data storage.

Embodiment two

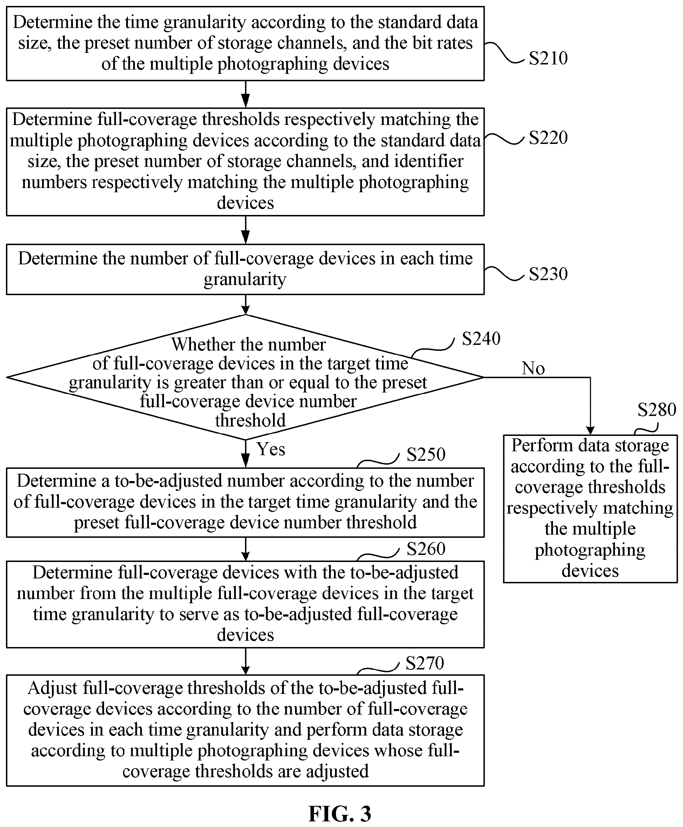

FIG. 3 is a flowchart of a data storage method according to embodiment two of the present application. In this embodiment, based on the previous embodiment, for the scenario where bit rates of the multiple photographing devices are the same, the process of determining the time granularity and the full-coverage thresholds of the multiple photographing devices, the process of determining the full-coverage device number threshold, the process of determining to-be-adjusted full-coverage devices, and the process of adjusting the full-coverage thresholds of the to-be-adjusted full-coverage devices are described.

As shown in FIG. 3, the method includes the following steps:

In S210, the time granularity is determined according to the standard data size, the preset number of storage channels, and the bit rates of the multiple photographing devices.

This embodiment describes the data storage method when the bit rates of the multiple photographing devices are the same. By way of example, when the bit rates of the multiple photographing devices are the same, it is feasible to divide the standard data size by the bit rate of the multiple photographing devices to obtain the total time required to store the standard video data and divide this total time by the preset number of storage channels to obtain the time granularity.

By way of example, when the number of storage channels is 100, the standard data size is 2 GB, and the bit rates of the multiple photographing devices are all 2 Mbps, the time granularity may be calculated as follows: 2 GB ÷ 2 Mbps ÷ 100 = 81.92 s.

In S220, the full-coverage thresholds respectively matching the multiple photographing devices are determined according to the standard data size, the preset number of storage channels, and identifier numbers respectively matching the multiple photographing devices.

By way of example, when the bit rates of the multiple photographing devices are the same, it is feasible to divide the standard data size by the preset number of storage channels to obtain the minimum adjustment amplitude of the full-coverage threshold. The full-coverage thresholds respectively matching the multiple photographing devices are determined according to the minimum adjustment amplitude and the identifier numbers respectively matching the multiple photographing devices.

By way of example, the full-coverage thresholds respectively matching the multiple photographing devices may be calculated using the following formula: $f = s \times 2 + \frac{s}{n} \times d$ . f denotes the full-coverage threshold. s denotes the standard data size. n denotes the number of storage channels. d denotes the identifier number matching the photographing device. $0 \leq d < n$. The term "s × 2" represents reserving memory equivalent to two standard data sizes of video data to ensure that the deletion of historical data does not affect the performance of normal data storage. It is feasible to determine the identifier number matching the photographing device by hashing the device serial number, by calculation from the device serial number using other computational methods, or by calculation from the device identifier of the photographing device. The method of determining the identifier number matching the photographing device is not limited in this embodiment.

In S230, the number of full-coverage devices in each time granularity is determined.

In S240, it is determined whether the number of full-coverage devices in the target time granularity is greater than or equal to the preset full-coverage device number threshold. If yes, S250 is performed. If no, S280 is performed.

The method of setting the full-coverage device number threshold is described in the previous embodiment and thus is not repeated in this embodiment.

In S250, a to-be-adjusted number is determined according to the number of full-coverage devices in the target time granularity and the preset full-coverage device number threshold.

In this embodiment, the full-coverage device number threshold is subtracted from the number of full-coverage devices in the target time granularity to obtain the to-be-adjusted number of to-be-adjusted full-coverage devices. The to-be-adjusted full-coverage devices are the full-coverage devices in the target time granularity whose number exceeds the full-coverage device number threshold. In this embodiment, the full-coverage pressure of the excessive full-coverage devices in the target time granularity is distributed to other time granularities with lower full-coverage pressure so that the number of full-coverage devices in the target time granularity is reduced to not exceed the full-coverage device number threshold. This can lower the full-coverage pressure in the target time granularity, prevent excessive concentration of full-coverage pressure, and thereby ensure normal data storage. By way of example, when the full-coverage device number threshold is max(n*5%, 2) and n is 100, the full-coverage device number threshold is 5. If the number of full-coverage devices in the target time granularity is 7, the number of to-be-adjusted full-coverage devices is 2.

In S260, full-coverage devices with the to-be-adjusted number are determined from multiple full-coverage devices in the target time granularity to serve as to-be-adjusted full-coverage devices.

By way of example, among the multiple full-coverage devices in the target time granularity, the to-be-adjusted number of full-coverage devices are determined. For example, when the full-coverage device number threshold is 5 and the number of full-coverage devices in the target time granularity is 7, the to-be-adjusted number is 2, and two to-be-adjusted full-coverage devices are determined from the seven full-coverage devices in the target time granularity. The method of determining the to-be-adjusted full-coverage devices may involve randomly selecting devices or involve sorting the multiple full-coverage devices based on the identifier numbers of the multiple full-coverage devices and selecting the first two devices with either the smallest or largest values. The method of determining the to-be-adjusted full-coverage devices is not limited in this embodiment.

In S270, full-coverage thresholds of the to-be-adjusted full-coverage devices are adjusted according to the number of full-coverage devices in each time granularity, and data storage is performed according to multiple photographing devices whose full-coverage thresholds are adjusted.

In this embodiment, a time granularity with a smaller number of full-coverage devices, that is, lower full-coverage pressure, may be determined according to the number of full-coverage devices in each time granularity. The full-coverage threshold of the to-be-adjusted full-coverage device is adjusted so that the full-coverage device with an adjusted full-coverage threshold reaches the full-coverage state in the time granularity with lower full-coverage pressure. After the full-coverage threshold of the to-be-adjusted full-coverage device is adjusted, the time granularity in which the to-be-adjusted full-coverage device reaches the full-coverage state is not in the target time granularity. If the full-coverage threshold of the to-be-adjusted full-coverage device is decreased, the time at which the to-be-adjusted full-coverage device reaches the full-coverage state is delayed. If the full-coverage threshold of the to-be-adjusted full-coverage device is increased, the time at which the to-be-adjusted full-coverage device reaches the full-coverage state is advanced.

In this embodiment, for a time granularity in which the number of full-coverage devices is greater than or equal to the full-coverage device number threshold, full-coverage devices whose number exceeds the full-coverage device number threshold are determined as to-be-adjusted full-coverage devices, and the full-coverage thresholds of the to-be-adjusted full-coverage devices are adjusted, so that the full-coverage pressure of the time granularity with a larger number of full-coverage devices can be distributed to a time granularity with a smaller number of full-coverage devices, thereby preventing concentrated full-coverage in the target time granularity. By way of example, the adjustment principle for the full-coverage thresholds of the to-be-adjusted full-coverage devices is that the full-coverage devices whose full-coverage thresholds have been adjusted reach the full-coverage state in time granularities with lower full-coverage pressure. This ensures that concentrated full-coverage can also be prevented from occurring in the time granularities in which the full-coverage devices with the adjusted full-coverage thresholds reach the full-coverage state. In this manner, the full-coverage pressure across multiple time granularities can be balanced, thereby reducing the impact of concentrated full-coverage of multiple devices on the performance of normal data storage.

By way of example, S270 may also include determining a time granularity with the minimum number of full-coverage devices according to the number of full-coverage devices in each time granularity, and determining the full-coverage thresholds of the to-be-adjusted full-coverage devices according to the standard data size, the preset number of storage channels, and an identifier number matching the time granularity with the minimum number of full-coverage devices.

In this embodiment, the time granularity with the minimum number of full-coverage devices indicates the minimum full-coverage pressure in this time granularity. It is possible to balance the full-coverage pressure across multiple time granularities by adjusting the to-be-adjusted full-coverage devices to reach the full-coverage state in this time granularity.

Using the preceding formula $f = s \times 2 + \frac{s}{n} \times d$ for calculating the full-coverage threshold as an example, the adjusted full-coverage threshold f is equal to $s \times 2 + \frac{s}{n} \times d_{min}$. $d_{min}$ denotes the identifier number matching the time granularity with the minimum number of full-coverage devices.

During the data storage, this embodiment performs real-time statistics on the number of full-coverage devices in the same time granularity. When some photographing devices actually reach the full-coverage state in time granularities that differ from the pre-calculated time granularities due to the device abnormality, network fluctuation, and other reasons, this embodiment can perform adaptive adjustment of the full-coverage state, that is, can re-adjust the full-coverage thresholds of the photographing devices according to the actual number of full-coverage devices in the multiple time granularities.

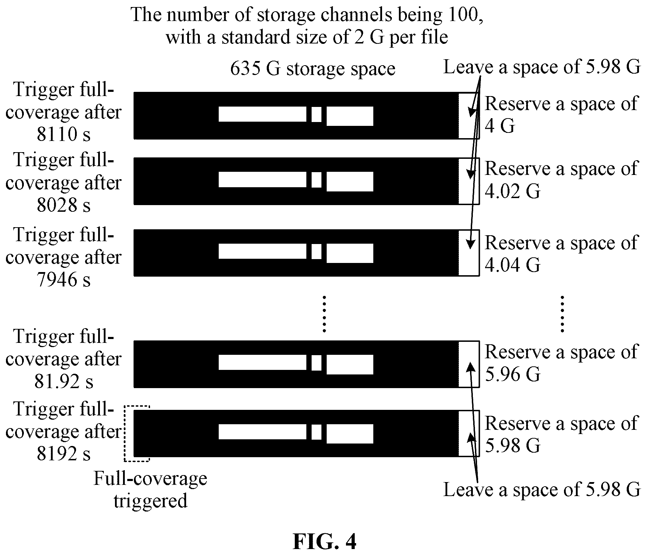

FIG. 4 is a diagram illustrating full-coverage pressure balancing when the bit rates of multiple photographing devices are the same according to an embodiment of the present application. As shown in FIG. 4, in the case where the bit rates of the multiple photographing devices are the same, using the number of storage channels being 100, the standard storage size of 2 G, the bit rates of the multiple photographing devices being 2 Mbps as an example, the time granularity is 81.92 s, and the full-coverage thresholds of the multiple photographing devices are 4 + d/50. d denotes the identifier number of a photographing device. In an ideal state, when the remaining memory of the multiple photographing devices is 5.98 GB, for a photographing device with an identifier number of 99, the full-coverage threshold is 4 + 98/50 = 5.96 G, this device just reaches the full-coverage state, and the second full-coverage is triggered after 81.92 × 100 = 8192 s. For a photographing device with an identifier number of 98, the full-coverage threshold is 4 + 98/50 = 5.96 G, and the first full-coverage is triggered after (5.98 G - 5.96 G) ÷ 2 Mbps ≈ 81.92 s. Similarly, for a photographing device with an identifier number of 0, the full-coverage threshold is 4 G, and the first full-coverage is triggered after (5.98 G - 4 G) ÷ 2 Mbps ≈ 8110 s. According to FIG. 4, the full-coverage of the photographing devices proceeds in a balanced manner, thereby preventing concentrated full-coverage from affecting the normal data storage.

In this embodiment, no matter the case where the bit rates of the multiple photographing devices are fixed or the case where abnormal factors such as device malfunction or network delay during the storage process cause the actual time granularity in which a photographing device reaches the full-coverage state to differ from the pre-calculated time granularity, the technical solution of this embodiment can distribute photographing devices reaching the full-coverage state in time granularities with higher full-coverage pressure to time granularities with lower full-coverage pressure. As a result, the number of full-coverage devices reaching the full-coverage state in each time granularity does not exceed the full-coverage device number threshold, thereby achieving balanced full-coverage among the multiple photographing devices during the storage process and preventing concentrated full-coverage from affecting the performance of normal data storage.

In S280, data storage is performed according to the full-coverage thresholds respectively matching the multiple photographing devices.

Embodiment three

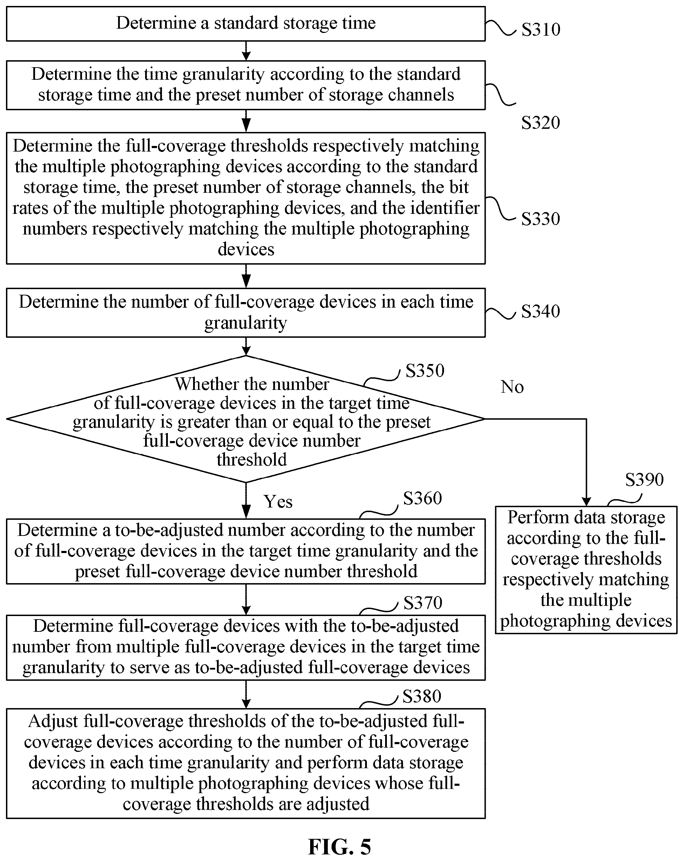

FIG. 5 is a flowchart of a data storage method according to embodiment three of the present application. In this embodiment, based on the previous embodiments, for the scenario where the bit rates of the multiple photographing devices are different, the process of determining the time granularity and the full-coverage thresholds of the multiple photographing devices, the process of determining the full-coverage device number threshold, the process of determining the to-be-adjusted full-coverage devices, and the process of adjusting the full-coverage thresholds of the to-be-adjusted full-coverage devices are described.

As shown in FIG. 5, the method includes the following steps:

In S310, a standard storage time is determined.

In this embodiment, the data storage method for the case of different bit rates of the multiple photographing devices is described. By way of example, when the bit rates of the multiple photographing devices are different, the storage time is usually fixed as a standard storage time t.

In S320, the time granularity is determined according to the standard storage time and the preset number of storage channels.

By way of example, the standard storage time is divided by the preset number of storage channels to obtain the time granularity. That is, the time granularity is calculated using the following formula: $w = \dfrac{t}{n}$ . w denotes the time granularity. t denotes the standard storage time.

In S330, the full-coverage thresholds respectively matching the multiple photographing devices are determined according to the standard storage time, the preset number of storage channels, the bit rates of the multiple photographing devices, and identifier numbers respectively matching the multiple photographing devices.

In this embodiment, the data size of the multiple photographing devices is calculated according to the product of the standard storage time and the bit rates of the multiple photographing devices. Similarly, the data size is divided by the preset number of storage channels to obtain the minimum adjustment amplitude of the full-coverage threshold of the photographing devices. The full-coverage thresholds respectively matching the multiple photographing devices are determined according to the minimum adjustment amplitude of the multiple photographing devices and the identifier numbers respectively matching the multiple photographing devices.

By way of example, the full-coverage thresholds respectively matching the multiple photographing devices may be determined using the following formula: $f = t \times y \times 2 + \dfrac{t \times y}{n} \times d$ . y denotes the bit rate of a photographing device.

In S340, the number of full-coverage devices in each time granularity is determined.

In S350, it is determined whether the number of full-coverage devices in the target time granularity is greater than or equal to the preset full-coverage device number threshold. If yes, S360 is performed. If no, S390 is performed.

In S360, a to-be-adjusted number is determined according to the number of full-coverage devices in the target time granularity and the preset full-coverage device number threshold.

In S370, full-coverage devices with the to-be-adjusted number are determined from multiple full-coverage devices in the target time granularity to serve as to-be-adjusted full-coverage devices.

When the bit rates of the multiple photographing devices are different, the method of determining the number of full-coverage devices in each time granularity, the method of setting the full-coverage device number threshold, and the method of determining the to-be-adjusted full-coverage devices are the same as those used when the bit rates of the multiple photographing devices are the same and thus are not repeated in this embodiment.

In S380, full-coverage thresholds of the to-be-adjusted full-coverage devices are adjusted according to the number of full-coverage devices in each time granularity, and data storage is performed according to multiple photographing devices whose full-coverage thresholds are adjusted.

By way of example, S380 may also include determining a time granularity with the minimum number of full-coverage devices according to the number of full-coverage devices in each time granularity, and determining the full-coverage thresholds of the to-be-adjusted full-coverage devices according to the standard storage time, the preset number of storage channels, the bit rates of the to-be-adjusted full-coverage devices, and the identifier number matching the time granularity with the minimum number of full-coverage devices.

When the bit rates of the multiple photographing devices are different, the method of determining the time granularity with the smallest number of full-coverage devices is the same as that used when the bit rates of the multiple photographing devices are the same and thus is not repeated in this embodiment.

Using the preceding formula $f = t \times y \times 2 + \frac{t \times y}{n} \times d$ for calculating the full-coverage threshold as an example, the adjusted full-coverage threshold f is equal to $t \times y \times 2 + \frac{t \times y}{n} \times d_{min}$. $d_{min}$ denotes the identifier number matching the time granularity with the minimum number of full-coverage devices.

Similarly, during the data storage, this embodiment performs real-time statistics on the number of full-coverage devices in the same time granularity. When some photographing devices actually reach the full-coverage state in time granularities that differ from the pre-calculated time granularities due to the device abnormality, network fluctuation, and other reasons, this embodiment can perform adaptive adjustment of the full-coverage state, that is, can re-adjust the full-coverage thresholds of the photographing devices according to the actual number of full-coverage devices in the multiple time granularities.

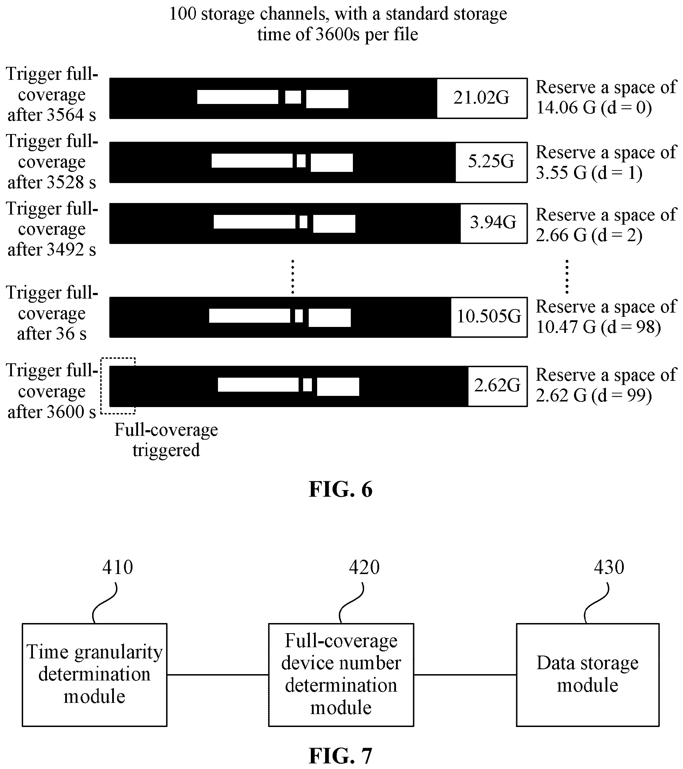

FIG. 6 is a diagram illustrating full-coverage pressure balancing when the bit rates of multiple photographing devices are different according to an embodiment of the present application. As shown in FIG. 6, in the case where the bit rates of the multiple photographing devices are different, using the number of storage channels being 100 and the standard storage time of 3600 s as an example, the time granularity is 3600/100 = 36 s. According to the bit rates of the multiple photographing devices and the identifier numbers of the multiple photographing devices, the full-coverage thresholds of the multiple photographing devices are determined by $f = t \times y \times 2 + \frac{t \times y}{n} \times d = 7200 \times y + 36 \times y \times d$. y denotes the bit rate of a photographing device. d denotes the identifier number of the photographing device. In an ideal state, for a photographing device with an identifier number of 99, the full-coverage threshold is 7200 × 2 Mbps + 36 × 2 Mbps × 99 ≈ 2.62 G. The device just reaches the full-coverage state, and the second full-coverage is triggered after 3600 s. For a photographing device with an identifier number of 98, the full-coverage threshold is 7200 × 8 Mbps + 36 × 8 Mbps × 98 ≈ 10.47 G, and the first full-coverage is triggered after (10.505 G - 10.47 G) ÷ 8 Mbps ≈ 36 s. Similarly, for a photographing device with an identifier number of 0, the full-coverage threshold is 7200 × 16 Mbps ≈ 14.06 G, and the first full-coverage is triggered after (21.02 G - 14.06 G) ÷ 16 Mbps ≈ 3564 s. According to FIG. 6, the full-coverage of the photographing devices proceeds in a balanced manner, thereby preventing concentrated full-coverage from affecting the normal data storage.

In S390, data storage is performed according to the full-coverage thresholds respectively matching the multiple photographing devices.

In this embodiment, when the bit rates of the multiple photographing devices are not fixed but the storage time is fixed or when abnormal factors such as device malfunction or network delay during the storage process cause the actual time granularity in which a photographing device reaches the full-coverage state to differ from the pre-calculated time granularity, the technical solution of this embodiment can distribute photographing devices reaching the full-coverage state in time granularities with higher full-coverage pressure to time granularities with lower full-coverage pressure. As a result, the number of full-coverage devices reaching the full-coverage state in each time granularity does not exceed the full-coverage device number threshold, thereby achieving balanced full-coverage among the multiple photographing devices during the storage process and preventing concentrated full-coverage from affecting the performance of normal data storage.

Embodiment four

FIG. 7 is a diagram illustrating the structure of a data storage apparatus according to embodiment four of the present application. As shown in FIG. 7, the apparatus includes a time granularity determination module 410, a full-coverage device number determination module 420, and a data storage module 430.

The time granularity determination module 410 is configured to determine, according to a preset number of storage channels, a time granularity and full-coverage thresholds respectively matching multiple photographing devices.

The full-coverage device number determination module 420 is configured to determine the number of full-coverage devices in each time granularity, where a full-coverage device is a photographing device whose remaining memory is less than or equal to a full-coverage threshold matching the full-coverage device.

The data storage module 430 is configured to, in response to determining that the number of full-coverage devices in a target time granularity is less than a preset full-coverage device number threshold, perform data storage according to the full-coverage thresholds respectively matching the plurality of photographing devices.

According to the technical solution of this embodiment of the present application, a time granularity and full-coverage thresholds respectively matching multiple photographing devices are determined according to a preset number of storage channels; the number of full-coverage devices in each time granularity is calculated; and in response to determining that the number of full-coverage devices in a target time granularity is less than a preset full-coverage device number threshold, data storage is performed according to the full-coverage thresholds respectively matching the multiple photographing devices. The technical solution of the present application achieves dynamic balancing of full-coverage pressure during multi-channel storage, avoiding storage performance insufficiency caused by multiple devices reaching full coverage simultaneously, thereby ensuring normal data storage.

Based on the previous embodiment, the apparatus also includes a to-be-adjusted number determination module, a to-be-adjusted full-coverage device determination module, and a full-coverage threshold adjustment module.

The to-be-adjusted number determination module is configured to, in response to determining that the number of full-coverage devices in the target time granularity is greater than or equal to the preset full-coverage device number threshold, determine a to-be-adjusted number according to the number of full-coverage devices in the target time granularity and the preset full-coverage device number threshold.

The to-be-adjusted full-coverage device determination module is configured to determine, from the full-coverage devices in the target time granularity, full-coverage devices with the to-be-adjusted number as to-be-adjusted full-coverage devices.

The full-coverage threshold adjustment module is configured to adjust full-coverage thresholds of the to-be-adjusted full-coverage devices according to the number of full-coverage devices in each time granularity and perform data storage according to multiple photographing devices whose full-coverage thresholds are adjusted.

Based on the previous embodiments, the apparatus also includes a first full-coverage device number determination module and a full-coverage device number threshold determination module.

The first full-coverage device number determination module is configured to determine a first full-coverage device number according to the preset number of storage channels and a full-coverage ratio.

The full-coverage device number threshold determination module is configured to determine the maximum value between the first full-coverage device number and a preset second full-coverage device number as the full-coverage device number threshold.

Based on the previous embodiments, the time granularity determination module 410 includes a first time granularity determination unit and a first full-coverage threshold determination unit.

The first time granularity determination unit is configured to, in response to determining that bit rates of the multiple photographing devices are the same, determining the time granularity according to a standard data size, the preset number of storage channels, and the bit rates of the multiple photographing devices.

The first full-coverage threshold determination unit is configured to determine the full-coverage thresholds respectively matching the multiple photographing devices according to the standard data size, the preset number of storage channels, and identifier numbers respectively matching the multiple photographing devices.

Based on the previous embodiments, the full-coverage threshold adjustment module includes a minimum time granularity determination unit and a first full-coverage threshold adjustment unit.

The minimum time granularity determination unit is configured to determine a time granularity with the minimum number of full-coverage devices according to the number of full-coverage devices in each time granularity.

The first full-coverage threshold adjustment unit is configured to determine the full-coverage thresholds of the to-be-adjusted full-coverage devices according to the standard data size, the preset number of storage channels, and an identifier number matching the time granularity with the minimum number of full-coverage devices.

Based on the previous embodiments, the time granularity determination module 410 includes a standard storage time determination unit, a second time granularity determination unit, and a second full-coverage threshold determination unit.

The standard storage time determination unit is configured to, in response to determining that the bit rates of the multiple photographing devices are different, determine a standard storage time.

The second time granularity determination unit is configured to determine the time granularity according to the standard storage time and the preset number of storage channels.

The second full-coverage threshold determination unit is configured to determine the full-coverage thresholds respectively matching the multiple photographing devices according to the standard storage time, the preset number of storage channels, the bit rates of the multiple photographing devices, and the identifier numbers respectively matching the multiple photographing devices.

Based on the previous embodiments, the full-coverage threshold adjustment module includes a second full-coverage threshold adjustment unit.

The second full-coverage threshold adjustment unit is configured to determine the full-coverage thresholds of the to-be-adjusted full-coverage devices according to the standard storage time, the preset number of storage channels, the bit rates of the to-be-adjusted full-coverage devices, and an identifier number matching the time granularity with the minimum number of full-coverage devices.

The data storage apparatus of this embodiment of the present application can perform the data storage method of any embodiment of the present application and has function modules for and effects of performing the method.

Embodiment five

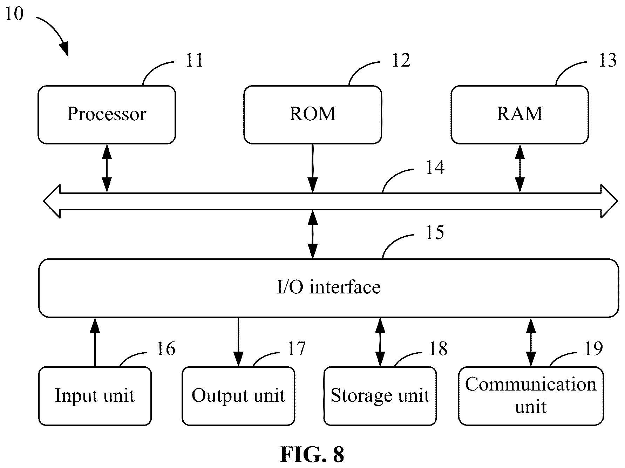

FIG. 8 is a diagram illustrating the structure of an electronic device 10 for implementing embodiments of the present application. The electronic device is intended to represent various forms of digital computers, for example, a laptop computer, a desktop computer, a worktable, a personal digital assistant, a server, a blade server, a mainframe computer, or another applicable computer. The electronic device may also represent various forms of mobile apparatuses, for example, a personal digital assistant, a cellphone, a smartphone, a wearable device (such as a helmet, glasses, or a watch), or another similar computing apparatus. Herein the shown components, the connections and relationships between these components, and the functions of these components are illustrative only.

As shown in FIG. 8, the electronic device 10 includes at least one processor 11 and a memory communicatively connected to the at least one processor 11, such as a read-only memory (ROM) 12 and a random-access memory (RAM) 13. The memory stores a computer program executable by the at least one processor. The processor 11 can perform various appropriate actions and processing according to a computer program stored in the ROM 12 or a computer program loaded into the RAM 13 from a storage unit 18. The RAM 13 may also store various programs and data required for the operation of the electronic device 10. The at least one processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include input units 16 such as a keyboard and a mouse, output units 17 such as various types of displays and speakers, the storage unit 18 such as a magnetic disk or an optical disk, and a communication unit 19 such as a network card, a modem, or a wireless communication transceiver. The communication unit 19 allows the electronic device 10 to exchange information/data with other devices over a computer network such as the Internet and/or various telecommunications networks.

The at least one processor 11 may be various general-purpose and/or special-purpose processing components having processing and computing capabilities. Examples of the processor 11 include a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The processor 11 performs the preceding various methods and processing, such as the data storage method.

In some embodiments, the data storage method may be implemented as computer programs tangibly contained in a computer-readable storage medium such as the storage unit 18. In some embodiments, part or all of the computer programs may be loaded and/or installed onto the electronic device 10 via the ROM 12 and/or the communication unit 19. When the computer programs are loaded to the RAM 13 and executed by the processor 11, one or more steps of the preceding data storage method may be performed. Alternatively, in other embodiments, the processor 11 may be configured, in any other suitable manner (for example, by means of firmware), to perform the data storage method.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software and/or a combination thereof. The various embodiments may include implementations in one or more computer programs. The one or more computer programs are executable and/or interpretable on a programmable system including at least one programmable processor. A programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by a processor. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program used by or in conjunction with an instruction execution system, apparatus, or device. The computer-readable storage medium may include an electronic, magnetic, optical, electromagnetic, infrared, or semiconductor system, apparatus, or device or any appropriate combination thereof. Alternatively, the computer-readable storage medium may be a machine-readable signal medium. The machine-readable storage medium may include an electrical connection based on one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof. The storage medium may be a non-transitory storage medium.

In order that interaction with a user is provided, the systems and techniques described herein may be implemented in the electronic device. The electronic device has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the electronic device. Other types of apparatuses may also be used for providing interaction with the user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in physical host and virtual private server (VPS) services.

Various forms of the preceding flows may be used, with steps reordered, added, or removed. For example, the steps described in the present application may be executed in parallel, in sequence, or in a different order as long as the desired results of the technical solutions of the present application can be achieved.

## Claims

1. A data storage method, comprising:

    determining, according to a preset number of storage channels, a time granularity and full-coverage thresholds respectively matching a plurality of photographing devices;
    determining a number of full-coverage devices in each time granularity, wherein a full-coverage device of the full-coverage devices is a photographing device whose remaining memory is less than or equal to a full-coverage threshold matching the full-coverage device; and
    in response to determining that a number of full-coverage devices in a target time granularity is less than a preset full-coverage device number threshold, performing data storage according to the full-coverage thresholds respectively matching the plurality of photographing devices.

2. The data storage method of claim 1, after determining the number of full-coverage devices in each time granularity, further comprising:

in response to determining that the number of full-coverage devices in the target time granularity is greater than or equal to the preset full-coverage device number threshold, determining a to-be-adjusted number according to the number of full-coverage devices in the target time granularity and the preset full-coverage device number threshold;
determining, from the full-coverage devices in the target time granularity, full-coverage devices with the to-be-adjusted number as to-be-adjusted full-coverage devices; and
adjusting full-coverage thresholds of the to-be-adjusted full-coverage devices according to the number of full-coverage devices in each time granularity and performing data storage according to a plurality of photographing devices whose full-coverage thresholds are adjusted.

3. The data storage method of claim 1 or 2, wherein a process of setting the full-coverage device number threshold comprises:

determining a first full-coverage device number according to the preset number of storage channels and a full-coverage ratio; and
using a maximum value between the first full-coverage device number and a preset second full-coverage device number as the full-coverage device number threshold.

4. The data storage method of claim 2, wherein determining, according to the preset number of storage channels, the time granularity and the full-coverage thresholds respectively matching the plurality of photographing devices comprises:

in response to determining that bit rates of the plurality of photographing devices are the same, determining the time granularity according to a standard data size, the preset number of storage channels, and the bit rates of the plurality of photographing devices; and
determining the full-coverage thresholds respectively matching the plurality of photographing devices according to the standard data size, the preset number of storage channels, and identifier numbers respectively matching the plurality of photographing devices.

5. The data storage method of claim 4, wherein adjusting the full-coverage thresholds of the to-be-adjusted full-coverage devices according to the number of full-coverage devices in each time granularity comprises:

determining a time granularity with a minimum number of full-coverage devices according to the number of full-coverage devices in each time granularity; and
determining the full-coverage thresholds of the to-be-adjusted full-coverage devices according to the standard data size, the preset number of storage channels, and an identifier number matching the time granularity with the minimum number of full-coverage devices.

6. The data storage method of claim 2, wherein determining, according to the preset number of storage channels, the time granularity and the full-coverage thresholds respectively matching the plurality of photographing devices comprises:

in response to determining that bit rates of the plurality of photographing devices are different, determining a standard storage time;
determining the time granularity according to the standard storage time and the preset number of storage channels; and
determining, according to the standard storage time, the preset number of storage channels, the bit rates of the plurality of photographing devices, and identifier numbers respectively matching the plurality of photographing devices, the full-coverage thresholds respectively matching the plurality of photographing devices.

7. The data storage method of claim 6, wherein adjusting the full-coverage thresholds of the to-be-adjusted full-coverage devices according to the number of full-coverage devices in each time granularity comprises:

determining a time granularity with a minimum number of full-coverage devices according to the number of full-coverage devices in each time granularity; and

determining, according to the standard storage time, the preset number of storage channels, bit rates of the to-be-adjusted full-coverage devices, and an identifier number matching the time granularity with the minimum number of full-coverage devices, the full-coverage thresholds of the to-be-adjusted full-coverage devices.

8. A data storage apparatus, comprising:

a time granularity determination module configured to determine, according to a preset number of storage channels, a time granularity and full-coverage thresholds respectively matching a plurality of photographing devices;

a full-coverage device number determination module configured to determine a number of full-coverage devices in each time granularity, wherein a full-coverage device of the full-coverage devices is a photographing device whose remaining memory is less than or equal to a full-coverage threshold matching the full-coverage device; and

a data storage module configured to, in response to determining that a number of full-coverage devices in a target time granularity is less than a preset full-coverage device number threshold, perform data storage according to the full-coverage thresholds respectively matching the plurality of photographing devices.

9. An electronic device, comprising a memory, a processor, and a computer program stored in the memory and executable on the processor, wherein when executing the computer program, the processor performs the data storage method of any one of claims 1 to 7.

10. A storage medium storing computer-executable instructions which, when executed by a computer processor, cause the computer processor to perform the data storage method of any one of claims 1 to 7.

Determine a time granularity and full-coverage thresholds respectively matching multiple photographing devices according to a preset number of storage channels ⌒ S110

Determine the number of full-coverage devices in each time granularity ⌒ S120

In response to determining that the number of full-coverage devices in a target time granularity is less than a preset full-coverage device number threshold, perform data storage according to the full-coverage thresholds respectively matching the multiple photographing devices ⌒ S130

**FIG. 1**

Since the bit rates are the same, the devices generally reach the full-coverage threshold simultaneously and trigger full-coverage

635 G storage space

635 G storage space

635 G storage space

Full-coverage deletion

Reserve a space of 5 G

**FIG. 2**

Determine the time granularity according to the standard data size, the preset number of storage channels, and the bit rates of the multiple photographing devices ~ S210

Determine full-coverage thresholds respectively matching the multiple photographing devices according to the standard data size, the preset number of storage channels, and identifier numbers respectively matching the multiple photographing devices ~ S220

Determine the number of full-coverage devices in each time granularity ~ S230

Whether the number of full-coverage devices in the target time granularity is greater than or equal to the preset full-coverage device number threshold — S240

No

Perform data storage according to the full-coverage thresholds respectively matching the multiple photographing devices — S280

Yes

Determine a to-be-adjusted number according to the number of full-coverage devices in the target time granularity and the preset full-coverage device number threshold — S250

Determine full-coverage devices with the to-be-adjusted number from the multiple full-coverage devices in the target time granularity to serve as to-be-adjusted full-coverage devices — S260

Adjust full-coverage thresholds of the to-be-adjusted full-coverage devices according to the number of full-coverage devices in each time granularity and perform data storage according to multiple photographing devices whose full-coverage thresholds are adjusted — S270

**FIG. 3**

The number of storage channels being 100,
with a standard size of 2 G per file

635 G storage space     Leave a space of 5.98 G

Trigger full-
coverage after
8110 s

Reserve a space of
4 G

Trigger full-
coverage after
8028 s

Reserve a space of
4.02 G

Trigger full-
coverage after
7946 s

Reserve a space of
4.04 G

Trigger full-
coverage after
81.92 s

Reserve a space of
5.96 G

Trigger full-
coverage after
8192 s

Reserve a space of
5.98 G

Full-coverage
triggered

Leave a space of 5.98 G

**FIG. 4**

```
┌─────────────────────────────────────────────────────┐
│         Determine a standard storage time            │───S310
└─────────────────────────────────────────────────────┘
                          │
                          ▼
┌─────────────────────────────────────────────────────┐
│ Determine the time granularity according to the      │
│ standard storage time and the preset number of       │───
│ storage channels                                      │   S320
└─────────────────────────────────────────────────────┘
                          │
                          ▼
┌─────────────────────────────────────────────────────┐
│ Determine the full-coverage thresholds respectively  │
│ matching the multiple photographing devices          │
│ according to the standard storage time, the preset   │
│ number of storage channels, the bit rates of the     │
│ multiple photographing devices, and the identifier   │───S330
│ numbers respectively matching the multiple           │
│ photographing devices                                 │
└─────────────────────────────────────────────────────┘
                          │
                          ▼
┌─────────────────────────────────────────────────────┐
│ Determine the number of full-coverage devices in     │───S340
│ each time granularity                                 │
└─────────────────────────────────────────────────────┘
                          │
                          ▼
```

Whether the number of full-coverage devices in the target time granularity is greater than or equal to the preset full-coverage device number threshold — S350

No → 

S390

Perform data storage according to the full-coverage thresholds respectively matching the multiple photographing devices

Yes — S360

```
┌─────────────────────────────────────────────────────┐
│ Determine a to-be-adjusted number according to the   │
│ number of full-coverage devices in the target time   │
│ granularity and the preset full-coverage device      │
│ number threshold                                      │
└─────────────────────────────────────────────────────┘
                          │
                          ▼                    S370
┌─────────────────────────────────────────────────────┐
│ Determine full-coverage devices with the to-be-      │
│ adjusted number from multiple full-coverage devices  │
│ in the target time granularity to serve as to-be-    │
│ adjusted full-coverage devices                        │
└─────────────────────────────────────────────────────┘
                          │
                          ▼                    S380
┌─────────────────────────────────────────────────────┐
│ Adjust full-coverage thresholds of the to-be-        │
│ adjusted full-coverage devices according to the      │
│ number of full-coverage devices in each time         │
│ granularity and perform data storage according to    │
│ multiple photographing devices whose full-coverage   │
│ thresholds are adjusted                               │
└─────────────────────────────────────────────────────┘
```

**FIG. 5**

100 storage channels, with a standard storage
time of 3600s per file

| Trigger full-coverage after 3564 s | 21.02G | Reserve a space of 14.06 G (d = 0) |
| Trigger full-coverage after 3528 s | 5.25G | Reserve a space of 3.55 G (d = 1) |
| Trigger full-coverage after 3492 s | 3.94G | Reserve a space of 2.66 G (d = 2) |
| Trigger full-coverage after 36 s | 10.505G | Reserve a space of 10.47 G (d = 98) |
| Trigger full-coverage after 3600 s | 2.62G | Reserve a space of 2.62 G (d = 99) |

Full-coverage
triggered

**FIG. 6**

410

**Time granularity determination module**

420

**Full-coverage device number determination module**

430

**Data storage module**

**FIG. 7**

FIG. 8

## INTERNATIONAL SEARCH REPORT

International application No.

**PCT/CN2023/142586**

### A. CLASSIFICATION OF SUBJECT MATTER

H04L 67/1025(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS: CNKI; CNTXT; ENTXTC; VCN; ENTXT; VEN; WPABS; DWPI: 监控, 拍摄, 摄像, 存储, 保存, 内存, 缓存, 时间, 时段, 阈值, 门限, 覆盖, 数目, 数量, monitor, capture, camera, store, save, memory, cache, time, period, threshold, coverage, number, quantity

### C. DOCUMENTS CONSIDERED TO BE RELEVANT

| Category* | Citation of document, with indication, where appropriate, of the relevant passages | Relevant to claim No. |
|---|---|---|
| A | CN 116010357 A (ZHEJIANG UNIVIEW TECHNOLOGIES CO., LTD.) 25 April 2023 (2023-04-25) description, paragraphs [0002]-[0135], and figures 1-5 | 1-10 |
| A | CN 105912703 A (BEIJING BAIDU NETCOM SCIENCE AND TECHNOLOGY CO., LTD.) 31 August 2016 (2016-08-31) entire document | 1-10 |
| A | CN 108076317 A (HANGZHOU HIKVISION DIGITAL TECHNOLOGY CO., LTD.) 25 May 2018 (2018-05-25) entire document | 1-10 |
| A | CN 109996031 A (ZHEJIANG UNIVIEW TECHNOLOGIES CO., LTD.) 09 July 2019 (2019-07-09) entire document | 1-10 |
| A | CN 114968945 A (CHONGQING UNISINSIGHT TECHNOLOGY CO., LTD.) 30 August 2022 (2022-08-30) entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 March 2024** | **31 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/142586** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2022156763 A1 (HUAWEI TECHNOLOGIES CO., LTD.) 28 July 2022 (2022-07-28) entire document | 1-10 |

Form PCT/ISA/210 (second sheet) (July 2022)

**INTERNATIONAL SEARCH REPORT**
Information on patent family members

| International application No. |
| --- |
| **PCT/CN2023/142586** |

| Patent document cited in search report | | | Publication date (day/month/year) | Patent family member(s) | Publication date (day/month/year) |
| --- | --- | --- | --- | --- | --- |
| CN | 116010357 | A | 25 April 2023 | None | |
| CN | 105912703 | A | 31 August 2016 | None | |
| CN | 108076317 | A | 25 May 2018 | None | |
| CN | 109996031 | A | 09 July 2019 | None | |
| CN | 114968945 | A | 30 August 2022 | None | |
| WO | 2022156763 | A1 | 28 July 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310559310